# EUROPÄISCHE PATENTANMELDUNG

(11) **EP 4 806 693 A1**
(43) Veröffentlichungstag der Anmeldung: **16.09.2026**
(21) Anmeldenummer: 26163900.9
(22) Anmeldetag: 11.03.2026
(51) Int. Cl.: B60K 17/346, B60K 17/04, B60K 17/35, F16H 48/20

(54) **ELEKTRISCHE ANTRIEBSANORDNUNG**

(30) Priorität: 12.03.2025 DE 102025109417
(71) Anmelder: ZF Friedrichshafen AG, 88046 Friedrichshafen (DE)
(72) Erfinder: PFEFFER, Andreas, 94234 Viechtach (DE); REITINGER, Franz, 4092 Esternberg (AT); MUHLBAUER, Alexander, 94575 Windorf (DE)
(74) Vertreter: ZF Friedrichshafen AG

(57) **Zusammenfassung**

Die Erfindung betrifft eine elektrische Antriebsanordnung (80) für ein Fahrzeug (100). Die elektrische Antriebsanordnung weist einen Rahmenlängsträger (90) und einen elektrischen Achsantrieb (1) auf. Der elektrische Achsantrieb weist eine erste Achse (2) zum Anbringen von Rädern (6) und eine elektrischen Antriebseinrichtung (7) zum Antreiben der ersten Achse (2) auf. Der elektrische Achsantrieb weist zudem einen Abtrieb (14) mit einem Abtriebselement (12) zum mechanischen Anbinden einer zweiten Achse (50) zum Anbringen von Rädern (6) auf. Die elektrische Antriebsanordnung ist ausgebildet, um mit der elektrischen Antriebseinrichtung neben der ersten Achse (2) auch die zweite Achse über das Abtriebselement (12) anzutreiben. Der Abtrieb (14) ist derart ausgebildet, dass ein mit dem Abtriebselement (12) mechanisch gekoppelter Drehmomentübertragungsabschnitt (18) zum Übertragen eines Drehmoments von dem Abtriebselement (12) zu der zweiten Achse zumindest teilweise unterhalb des Rahmenlängsträgers (90) verlaufen kann. Die Erfindung betrifft zudem ein Fahrzeug (100) mit der elektrischen Antriebsanordnung (80).

## Beschreibung

### Technisches Gebiet

Die vorliegende Offenbarung bezieht sich auf eine elektrische Antriebsanordnung für ein Fahrzeug. Zudem bezieht sich die vorliegende Offenbarung auf ein Fahrzeug mit einer solchen elektrischen Antriebsanordnung.

### Stand der Technik

Im Rahmen der Elektrifizierung von Antriebsanordnungen für Fahrzeuge wurden elektrische Achsantriebe entwickelt, mit denen eine Fahrzeugachse antreibbar ist. Zum Bereitstellen eines Allradantriebs von Fahrzeugen ist es bekannt, jede der Fahrzeugachsen mit einem eigenen elektrischen Achsantrieb auszustatten, um so eine Allradfunktionalität bereitstellen zu können.

### Darstellung der Erfindung

Die vorliegende Offenbarung bezieht sich in einem ersten Aspekt auf eine elektrische Antriebsanordnung für ein Fahrzeug. Bei dem Fahrzeug kann es sich um ein Nutzfahrzeug, beispielsweise einen Lastkraftwagen, handeln. Bei dem Fahrzeug kann es sich um ein Off-Highway- oder um ein On-Highway-Fahrzeug handeln. Beispielsweise handelt es sich bei dem Fahrzeug um ein Militärfahrzeug, wie einen Radpanzer.

Die elektrische Antriebsanordnung weist einen Rahmenlängsträger und einen elektrischen Achsantrieb auf. Der Rahmenlängsträger kann der elektrischen Antriebsanordnung oder dem Fahrzeug zugeordnet sein. Der Rahmenlängsträger kann ein Längsträger eines Rahmens des Fahrzeugs sein. Der Rahmen kann als ein Teil eines Fahrgestells des Fahrzeugs ausgebildet sein. An dem Fahrgestell können ein Fahrwerk, Antriebskomponenten, eine Karosserie und/oder ein Transportgutbehälter sowie eine Anhängerkupplung angebracht sein. An dem Fahrgestell kann auch ein Energiespeicher, beispielsweise eine Batterie, angebracht sein. Das Fahrgestell kann einen oder mehrere Rahmenlängsträger aufweisen. Falls mehrere Rahmenlängsträger vorgesehen sind, können diese beispielsweise mit Querträgern miteinander verbunden sein. Der Rahmenlängsträger kann als ein Teil einer selbsttragenden Karosserie ausgebildet sein. Beispielsweise kann das Fahrgestell einer Bodengruppe der selbsttragenden Karosserie entsprechen und den Rahmenlängsträger aufweisen. Der elektrische Achsantrieb kann an dem Rahmenlängsträger befestigt sein. Die Befestigung kann unmittelbar oder mittelbar erfolgen. Bei einer unmittelbaren Befestigung kann der elektrische Achsantrieb direkt an dem Rahmenlängsträger befestigt, beispielsweise verschraubt, sein. Bei einer mittelbaren Befestigung kann der elektrische Achsantrieb an einer Fahrwerkskomponente befestigt sein. Die Fahrwerkskomponente kann an dem Rahmenlängsträger befestigt sein. Die Fahrwerkskomponente kann Führungselemente und/oder Kraftübertragungselemente aufweisen, um den elektrischen Achsantrieb relativ zu dem Rahmenlängsträger zu führen und Kräfte von dem elektrischen Achsantrieb in den Rahmenlängsträger einzuleiten. Beispiele für Bestandteile der Fahrwerkskomponente umfassen einen Querlenker, einen Längslenker, einen Schräglenker, eine Pendelachse, einen Stabilisator, einen Dreieckslenker, eine Mehrlenkerachse, ein Federbein, einen Dämpfer sowie Lenkungselemente.

Der elektrische Achsantrieb weist eine erste Achse zum Antreiben von Rädern auf. Die Räder können mit der ersten Achse direkt und alternativ oder zusätzlich über eine oder mehrere Getriebestufen mechanisch wirkverbunden sein. Über die erste Achse kann den Rädern ein Drehmoment zum Vortrieb des Fahrzeugs zugeführt werden. Der elektrische Achsantrieb umfasst ferner eine Antriebseinrichtung zum Antreiben der ersten Achse. Die Antriebseinrichtung kann eine oder mehrere Antriebseinheiten, beispielsweise Elektromotoren, aufweisen. Die Antriebseinrichtung kann auch ein Getriebe aufweisen. Bei dem Getriebe kann es sich um ein Getriebe in Planeten- und alternativ oder zusätzlich in Stirnradbauweise handeln. Das Getriebe kann eine Schalteinrichtung, beispielsweise ein oder mehrere Schaltelemente, aufweisen, mit denen unterschiedliche Übersetzungsverhältnisse, also unterschiedliche Gänge, geschaltet werden können. Das Getriebe kann einen oder mehrere Gänge sowohl in Vorwärts- als auch in Rückwärtsrichtung bereitstellen. Die Antriebseinrichtung kann ausgebildet sein, um ein Drehmoment bereitzustellen, mit dem das Fahrzeug bestimmungsgemäß fortbewegt werden kann. So kann das Drehmoment der Antriebseinrichtung an die erste Achse und von dieser an die Räder zum Fortbewegen des Fahrzeugs übertragen werden. Bei den Rädern kann es sich um Räder handeln, die unmittelbar mit dem Boden zum Fortbewegen des Fahrzeugs im Eingriff stehen. Alternativ kann es sich bei den Rädern auch um Räder handeln, die mit einem Endlosumlaufelement, beispielsweise einer Kette, im Eingriff stehen. Die Antriebseinrichtung kann quer zu einer Fahrzeuglängsrichtung angeordnet sein, beispielsweise derart, dass ein Ausgang der Antriebseinrichtung achsparallel beabstandet oder koaxial zu der ersten Achse angeordnet ist. Die Antriebseinrichtung kann auch in der Fahrzeuglängsrichtung oder schräg angeordnet sein.

Darüber hinaus weist der elektrische Achsantrieb einen Abtrieb mit einem Abtriebselement zum mechanischen Anbinden einer zweiten Achse zum Anbringen von Rädern auf. Bei dem Abtrieb kann es sich beispielsweise um ein Zahnrad handeln, das als Festrad ausgebildet sein kann. Beispielsweise kann das Zahnrad als Stirnrad oder Kegelrad ausgebildet sein. Das Abtriebselement kann als rotierbares Element ausgebildet sein, welches von dem Abtrieb angetrieben wird und ein Drehmoment von dem Abtrieb aufnehmen kann. Zwischen dem Abtrieb und dem Abtriebselement kann eine Übersetzung ungleich 1 vorgesehen sein. Beispielsweise kann eine Übersetzung ins Schnelle vorgesehen sein. Damit können für eine bestimmte Drehzahl der ersten Achse und der zweiten Achse die Komponenten im Drehmomentfluss zwischen dem Abtrieb und der zweiten Achse zur Übertragung eines kleineren Drehmoments bei höherer Drehzahl dimensioniert werden. Das Abtriebselement kann beispielsweise ein entsprechendes Zahnrad aufweisen, welches mit dem als Zahnrad ausgebildeten Abtrieb kämmt. Das Abtriebselement kann Vorrichtungen zum mechanischen Anbinden der zweiten Achse, beispielsweise zur Drehmomentübertragung, aufweisen. Beispielsweise kann das Abtriebselement als eine Welle ausgebildet sein. Die Welle kann Einrichtungen zur Drehmomentübertragung aufweisen. Beispiele für solche Einrichtungen umfassen formschlüssige und reibschlüssige Welle-Nabe-Verbindungen. Zum Beispiel kann die Welle des Abtriebselements eine Profilverzahnung aufweisen. Das Abtriebselement kann als anderes Maschinenelement ausgebildet sein, über welches ein Drehmoment an eine zweite Achse übertragen werden kann. Das Abtriebselement kann in einer Ausführungsform ausgebildet sein, um an Maschinenelemente, die im Zusammenhang mit Allradsystemen für Verbrennungsmotoren herkömmlich verwendet werden, angebunden zu werden.

Die elektrische Antriebsanordnung der vorliegenden Offenbarung ist ausgebildet, um mit der elektrischen Antriebseinrichtung nicht nur die erste Achse, sondern auch die zweite Achse über das Abtriebselement antreiben zu können. Der elektrische Achsantrieb kann dabei über das Abtriebselement an die zweite Achse ein Drehmoment abgeben, das allein oder im Zusammenspiel mit einem Drehmoment einer weiteren Antriebseinrichtung zum Antreiben der zweiten Achse eingerichtet ist. Dabei kann der elektrische Achsantrieb das Drehmoment der Antriebseinrichtung an die erste und die zweite Achse gleich oder aber unterschiedlich verteilen. Beispielsweise kann ein größerer Teil des Drehmoments an die erste Achse und ein kleinerer Teil des Drehmoments an die zweite Achse übertragen werden. Der elektrische Achsantrieb kann eine Schalteinrichtung aufweisen, mit welcher das Antreiben der zweiten Achse selektiv zu- oder abgeschaltet werden kann. Die zweite Achse kann eine Achse sein, die für den Betrieb in Verbindung mit einem Verbrennungsmotor ausgebildet ist. So kann es sich bei der zweiten Achse beispielsweise um eine für Verbrennungsmotoren ausgelegte Achse handeln. Das Abtriebselement des elektrischen Achsantriebs kann die zweite Achse über einen Drehmomentübertragungsabschnitt antreiben können. Der Drehmomentübertragungsabschnitt kann an Komponenten eines Allradsystems des Fahrzeugs, beispielsweise an ein Verteilergetriebe, zur Drehmomentübertragung verbindbar sein. Der Drehmomentübertragungsabschnitt kann eine Gelenkwelle, beispielsweise eine für Verbrennungsmotoren ausgelegte Gelenkwelle, aufweisen. Durch die Gelenkwelle kann ein zeitlich variabler räumlicher Versatz des Abtriebselements relativ zu dem Fahrzeug ausgeglichen werden. Der Drehmomentübertragungsabschnitt kann weitere Vorrichtungen zur Kraftübertragung und/oder Übersetzung aufweisen, beispielsweise Wellen, Verteilergetriebe, Getriebestufen, Schaltelemente, Riementriebe und/oder Kettentriebe.

Der Abtrieb ist derart ausgebildet, dass ein mit dem Abtriebselement mechanisch gekoppelter Drehmomentübertragungsabschnitt zum Übertragen eines Drehmoments von dem Abtriebselement zu der zweiten Achse zumindest teilweise unterhalb des Rahmenlängsträgers verlaufen kann. Eine derartige Ausgestaltung kann beispielsweise erzielt werden, indem das Abtriebselement an einer geeigneten Position in einer axialen Richtung der ersten Achse und/oder in einer Hochrichtung angeordnet wird. Das Abtriebselement kann beispielsweise unterhalb des Rahmenlängsträgers angeordnet sein oder davon versetzt sein. In einer Ausgestaltung können eine Rotationsachse des Abtriebselements und der Rahmenlängsträger mit Bezug auf eine axiale Richtung der ersten Achse in einer Ebene liegen. Die axiale Richtung der ersten Achse kann eine Erstreckungsrichtung der ersten Achse sein. Mit Bezug auf das Fahrzeug kann die axiale Richtung der ersten Achse eine Querrichtung sein. Die Rotationsachse des Abtriebselements kann sich in der Fahrzeuglängsrichtung erstrecken. Die Rotationsachse des Abtriebselements kann senkrecht zu der axialen Richtung der ersten Achse sein. Die eine Ebene kann eine Ebene sein, welche im Wesentlichen vertikal verläuft und die Rotationsachse des Abtriebselements beinhaltet. Die eine Ebene kann den Rahmenlängsträger schneiden. Das Abtriebselement kann in einer Hochrichtung des Fahrzeugs den Rahmenlängsträger überlappen. Das Abtriebselement kann in der Hochrichtung des Fahrzeugs den Rahmenlängsträger mittig oder zu einer Mittelachse des Rahmenlängsträgers versetzt überlappen. Das Abtriebselement kann in einer Ausgestaltung den Rahmenlängsträger in der Hochrichtung des Fahrzeugs nicht überlappen, sondern zu diesem in der axialen Richtung der ersten Achse versetzt sein.

Dadurch, dass der Drehmomentübertragungsabschnitt zumindest teilweise unterhalb des Rahmenlängsträgers verlaufen kann, wird Bauraum auf beiden lateralen Seiten des Rahmenlängsträgers freigehalten. Somit wird Bauraum, beispielsweise unterhalb des Rahmenlängsträgers, nutzbar gemacht. Als ein Ergebnis kann der Bauraum auf den lateralen Seiten des Rahmenlängsträgers, nämlich links und rechts mit Bezug auf das Fahrzeug, genutzt werden. Zum Beispiel können in diesem Bauraum Bauteile untergebracht werden, welche mit der Elektrifizierung des Fahrzeugs zusammenhängen. Beispielsweise kann ein Energiespeicher wie eine Batterie in diesem Bauraum untergebracht sein. Als ein Beispiel können zwei Rahmenlängsträger vorgesehen sein, zwischen welchen ein Energiespeicher des Fahrzeugs untergebracht ist und teilweise nach unten über die Rahmenlängsträger hinausragt. In einem solchen Fall kann durch die vorstehend beschriebene elektrische Antriebsanordnung dennoch ein Antrieb für die zweite Achse für einen Allradantrieb bereitgestellt werden.

Durch den ersten Aspekt der vorliegenden Offenbarung wird eine elektrische Antriebsanordnung bereitgestellt, mit welcher auf einfache und kosteneffiziente Weise ein Allradantrieb eines Fahrzeugs, beispielsweise eines Nutzfahrzeugs, realisierbar ist. Soll beispielsweise ein herkömmlicher für Verbrennungsmotoren ausgelegter Allradantrieb elektrifiziert werden, so kann die elektrische Antriebsanordnung der vorliegenden Offenbarung an einer der Achsen des Fahrzeugs vorgesehen und über dessen Abtrieb an eine weitere Achse des Fahrzeugs mechanisch angebunden werden. Die Anbindung an die weitere Achse kann dabei beispielsweise über bereits bestehende Komponenten erfolgen, da die bestehenden Komponenten in der Regel ein Fahrwerk umfassen und deshalb einen ausreichenden räumlichen Versatz des Abtriebselements zulassen, beispielsweise über eine Kardanwelle als Drehmomentübertragungsabschnitt. Zur Elektrifizierung des Allrad-Fahrzeugs kann in einem solchen Fall demnach lediglich das Austauschen von einer Fahrzeugachse mit der elektrischen Antriebsanordnung der vorliegenden Offenbarung erforderlich sein. Selbst wenn die bestehenden Komponenten keinen ausreichenden Versatz des Abtriebselements zulassen, kann es ausreichend sein, lediglich den Drehmomentübertragungsabschnitt an die elektrische Antriebsanordnung anzupassen. In diesem Fall können weitere Komponenten im Übertragungspfad zur zweiten Achse, beispielsweise Verteilergetriebe und deren Anbindung an die zweite Achse, übernommen werden. Darüber hinaus sind durch die Anordnung des Abtriebselements und die damit einhergehende Führung des Drehmomentübertragungsabschnitts unterhalb des Rahmenlängsträgers eine optimale Bauraumausnutzung und eine einfache Unterbringung weiterer Elektrifizierungskomponenten wie des Energiespeichers möglich. Demnach kann auf einfache und kosteneffiziente Art und Weise ein Allradantrieb eines Fahrzeugs elektrifiziert werden. Auch eine nachträgliche Elektrifizierung eines Allradantriebs eines Fahrzeugs ist mit der elektrischen Antriebsanordnung der vorliegenden Offenbarung beispielsweise im Rahmen einer Retrofit-Lösung möglich.

In einer Ausführungsform ist das Abtriebselement über eine Kegelradstufe oder eine Stirnradstufe antreibbar. Im Falle einer Kegelradstufe kann beispielsweise der Abtrieb als ein Tellerrad ausgebildet sein. In diesem Fall kann das Abtriebselement ein Ritzel aufweisen, welches mit dem Tellerrad kämmt. Durch die Kegelradstufe kann auf einfache Weise ein Winkelversatz zwischen der ersten Achse und dem Abtriebselement bereitgestellt werden. Zudem kann die Kegelradstufe eine Übersetzung ungleich 1 aufweisen. Beispielsweise kann die Kegelradstufe ins Schnelle übersetzen. Dadurch wird ein durch das Abtriebselement zu übertragendes Drehmoment reduziert. Folglich können auch eine Schnittstelle zu dem Drehmomentübertragungsabschnitt sowie der Drehmomentübertragungsabschnitt selbst kleiner ausgelegt werden. Im Falle einer Stirnradstufe kann der Abtrieb als ein Stirnrad ausgebildet sein und das Abtriebselement kann ein Stirnrad aufweisen, das mit dem Stirnrad des Abtriebs kämmt. Bei der Stirnradstufe kann auf gleiche Weise eine Übersetzung ungleich 1 bereitgestellt werden wie bei der Kegelradstufe, wodurch die gleichen Vorteile erzielt werden.

In einer Ausführungsform ist die elektrische Antriebseinrichtung achsparallel beabstandet zu der ersten Achse angeordnet. Eine Rotationsachse des Ausgangs der elektrischen Antriebseinrichtung kann in der Fahrzeuglängsrichtung, alternativ oder zusätzlich in der Hochrichtung des Fahrzeugs, zu der ersten Achse versetzt sein. Dadurch kann ein vorhandener Bauraum in der Richtung des Versatzes optimal ausgenutzt werden. Zudem wird ein einfacher und kosteneffizienter Aufbau der elektrischen Antriebsanordnung erzielt.

In einer Ausführungsform ist die elektrische Antriebseinrichtung koaxial zu der ersten Achse angeordnet. Beispielsweise kann eine von der ersten Achse und der elektrischen Antriebseinrichtung eine Hohlwelle aufweisen. Mit einer koaxialen Anordnung der elektrischen Antriebseinrichtung wird radialer Bauraum um die erste Achse herum effizient genutzt.

In einer Ausführungsform ist die elektrische Antriebseinrichtung abgewinkelt zu der ersten Achse angeordnet. Beispielsweise kann die elektrische Antriebseinrichtung über ein Winkelgetriebe mit der ersten Achse mechanisch wirkverbunden sein. Das Winkelgetriebe kann ein Antriebsrad und ein Abtriebsrad aufweisen, deren Rotationsachsen nicht parallel sind, sondern relativ zueinander in einem Winkel stehen, der betragsmäßig größer 0° ist. Optimal können die Rotationsachsen auch zueinander versetzt sein. Das Antriebsrad kann mit dem Ausgang der elektrischen Antriebseinrichtung mechanisch wirkverbunden sein. Die mechanische Wirkverbindung kann auch schaltbar sein. Das Abtriebsrad kann mit der ersten Achse mechanisch wirkverbunden sein. Die mechanische Wirkverbindung kann weitere Komponenten im Drehmomentfluss aufweisen, beispielsweise weitere Getriebeelemente, Differentiale, Schaltelemente und dergleichen. Das Winkelgetriebe kann eine Übersetzung gleich 1 oder ungleich 1 aufweisen. Beispiele für Bauformen des Winkelgetriebes umfassen Kegelradgetriebe, Hypoidgetriebe und Schneckengetriebe. Im Falle eines Kegelradgetriebes oder eines Hypoidgetriebes können beispielsweise das Antriebsrad als ein Ritzel und das Abtriebsrad als ein Tellerrad oder umgekehrt ausgebildet sein. Der Winkel zwischen den Rotationsachsen des Winkelgetriebes kann in einer Ausführungsform 90° betragen, wodurch eine orthogonale Anordnung der abgewinkelten elektrischen Antriebseinrichtung zu der ersten Achse erzielt wird. Durch die abgewinkelte Anordnung der elektrischen Antriebseinrichtung kann ein Bauraumbedarf der elektrischen Antriebseinrichtung in der axialen Richtung der ersten Achse reduziert werden. Beispielsweise kann sich die elektrische Antriebseinrichtung in der Fahrzeuglängsrichtung erstrecken. Beispielsweise kann die elektrische Antriebseinrichtung zwischen zwei Rahmenlängsträgern angeordnet sein. Durch die Ausführungsform wird vorhandener Bauraum effizient genutzt.

In einer Ausführungsform weist der elektrische Achsantrieb ein Längsdifferential zum Drehzahlausgleich zwischen der ersten Achse und der zweiten Achse auf. Das Längsdifferential ist als zumindest eines von einem Planetenraddifferential und einem Kegelraddifferential ausgebildet. Das Längsdifferential kann ausgebildet sein, um es zu ermöglichen, dass die erste Achse und die zweite Achse mit unterschiedlichen Drehzahlen drehen. Darüber hinaus kann das Längsdifferential ausgebildet sein, um ein Drehmoment der elektrischen Antriebseinrichtung an die erste und die zweite Achse zu übertragen, beispielsweise auf die erste und die zweite Achse aufzuteilen. Wie oben beschrieben, kann mittels des Längsdifferentials dabei eine Aufteilung in gleiche oder unterschiedliche Teile auf die erste und die zweite Achse erfolgen. Das Längsdifferential kann koaxial zu der elektrischen Antriebseinrichtung und alternativ oder zusätzlich der ersten Achse angeordnet sein. Falls die elektrische Antriebseinrichtung abgewinkelt ist, kann das Längsdifferential ebenfalls abgewinkelt sein. Eine mechanische Wirkverbindung mit der ersten Achse kann dann beispielsweise über eine Kegelradstufe erfolgen, wie vorstehend mit Bezug auf die abgewinkelte elektrische Antriebseinrichtung beschrieben wurde. In einer Ausgestaltung kann das Längsdifferential achsparallel zu dem Abtrieb sein und über eine Stirnradstufe mit dem Abtrieb mechanisch wirkverbunden sein.

Soll ein Drehmoment der elektrischen Antriebseinrichtung auf die erste und die zweite Achse mit unterschiedlichen Anteilen verteilt werden, kann es sich bei dem Längsdifferential um ein Planetenraddifferential handeln. Das Planetenraddifferential kann als Minus- oder Plus-Planetenradsatz ausgebildet sein. Das Planetenraddifferential kann einen oder mehrere Planetenradsätze aufweisen. In einer Ausführungsform weist das Planetenraddifferential einen einzigen als Minus-Planetenradsatz ausgebildeten Planetenradsatz auf. Das Planetenraddifferential kann eine Standübersetzung aufweisen, die es ermöglicht, ein Drehmoment der elektrischen Antriebseinrichtung mit unterschiedlichen Anteilen auf die erste und die zweite Achse zu verteilen. Beispielsweise kann der elektrische Achsantrieb als ein Hinterachsantrieb ausgebildet sein, während eine Vorderachse an den Abtrieb mechanisch angebunden sein kann. Über das als Planetenraddifferential ausgebildete Längsdifferential kann nun ein Drehmoment der elektrischen Antriebseinrichtung so auf die Hinterbeziehungsweise Vorderachse aufgeteilt werden, dass beispielsweise ein größerer Anteil auf die Hinterachse und ein kleinerer Anteil auf die Vorderachse entfällt. Alternativ oder zusätzlich kann das Längsdifferential ein Kegelraddifferential aufweisen, welches ein Drehmoment der elektrischen Antriebseinrichtung zu gleichen Teilen auf die erste und die zweite Achse aufteilen kann. Dadurch wird ein einfacher und kosteneffizienter Aufbau der elektrischen Antriebseinrichtung erzielt.

In einer Ausführungsform weist der elektrische Achsantrieb eine Schalteinrichtung zum Herstellen und Unterbrechen einer mechanischen Wirkverbindung zwischen dem Abtrieb und der zweiten Achse auf. Die Schalteinrichtung kann beispielsweise als eine Kupplung ausgebildet sein. Bei der Kupplung kann es sich beispielsweise um eine Kupplung oder eine Reibkupplung, zum Beispiel eine Lamellenkupplung, handeln. Die Schalteinrichtung kann dazu ausgebildet sein, die mechanische Wirkverbindung zwischen dem Abtrieb und der zweiten Achse selektiv herzustellen und zu unterbrechen. In manchen Fahrzuständen kann es ausreichend sein, lediglich eine der ersten Achse und der zweiten Achse anzutreiben. In diesem Fall kann durch die Schalteinrichtung die zweite Achse abgekoppelt werden, beispielsweise um die Energieeffizienz zu steigern. Zudem kann es Betriebsstrategien für das Fahrzeug geben, in welchen die zweite Achse lediglich in Fahrzuständen zugeschaltet wird, in welchen ein Drehzahlausgleich zwischen der ersten Achse und der zweiten Achse nicht erforderlich ist. In einem solchen Fall kann auf ein Längsdifferential verzichtet werden, und die zweite Achse kann durch die Schalteinrichtung in Fahrzuständen, in welchen potenziell schädliche Drehzahlunterschiede auftreten, abgekoppelt werden. Dadurch wird ein einfacher und kosteneffizienter Aufbau der elektrischen Antriebsanordnung erzielt.

In einer Ausführungsform weist die erste Achse einen ersten Achsabschnitt zum Anbringen eines ersten Rads, einen zweiten Achsabschnitt zum Anbringen eines zweiten Rads und ein mit dem ersten und zweiten Achsabschnitt mechanisch wirkverbundenes Querdifferential zum Drehzahlausgleich zwischen den Achsabschnitten auf. Bei den Achsabschnitten kann es sich jeweils um Komponenten handeln, die aus einem oder mehreren drehfest miteinander verbundenen Bauteilen ausgebildet sein können. Mit jedem der Achsabschnitte kann ein Rad in der vorstehend beschriebenen Art und Weise verbunden sein. Bei dem Querdifferential kann es sich um ein Differential in einer Kegelradbauweise handeln. Alternativ oder zusätzlich kann es sich bei dem Querdifferential um ein Differential in einer Planetenradbauweise handeln. Das Querdifferential kann koaxial zu dem ersten und zweiten Achsabschnitt vorgesehen sein. Handelt es sich bei dem Querdifferential um ein Kegelraddifferential, kann dieses einen Differentialkorb aufweisen, der zum Antreiben der Achsabschnitte und damit der mit diesen verbundenen Rädern mechanisch mit der elektrischen Antriebseinrichtung wirkverbunden sein kann. In dem Differentialkorb können zwei parallel zueinander angeordnete Kegelräder gelagert sein, die jeweils drehfest mit den Achsabschnitten verbunden sind. Die Kegelräder können jeweils mit einem Zwischenrad kämmen, um einen Drehzahlausgleich zwischen den Achsabschnitten zu ermöglichen. Die Achse kann ferner eine Differentialsperre aufweisen, mit der beispielsweise mindestens einer der Achsabschnitte drehfest selektiv mit dem Differentialkorb verbunden werden kann.

In einer Ausführungsform weist die erste Achse jeweils eine Planetenradstufe zum Bereitstellen einer zusätzlichen Übersetzung zwischen den Achsabschnitten und den Rädern auf. Die Planetenradstufe kann beispielsweise als ein Endgetriebe zum Bereitstellen einer zusätzlichen Übersetzung ungleich 1 der Räder dienen. Beispielsweise kann die Planetenradstufe eine Übersetzung ins Langsame bereitstellen. Damit können für eine bestimmte Raddrehzahl die Komponenten im Drehmomentfluss zwischen der elektrischen Antriebseinrichtung und den Rädern zur Übertragung eines kleineren Drehmoments bei höherer Drehzahl dimensioniert werden. Alternativ oder zusätzlich kann die erste Achse jeweils eine Stirnradstufe zwischen den Achsabschnitten und den Rädern aufweisen. Die Stirnradstufe kann ebenfalls eine Übersetzung ungleich 1 bereitstellen. Zudem ermöglicht die Stirnradstufe die Bereitstellung der ersten Achse als eine Portalachse.

In einer Ausführungsform weist die elektrische Antriebsanordnung einen Drehmomentübertragungsabschnitt in einem Drehmomentfluss von dem Abtriebselement zu der zweiten Achse auf. Der Drehmomentübertragungsabschnitt verläuft zumindest teilweise unterhalb des Rahmenlängsträgers. Der Drehmomentübertragungsabschnitt kann wie vorstehend beschrieben ausgebildet sein. Durch das Bereitstellen des Drehmomentübertragungsabschnitts als Teil der elektrischen Antriebsanordnung kann die Kompatibilität zu einem bestehenden Allradsystem des Fahrzeugs verbessert werden. Damit wird das Einsatzspektrum beispielsweise für Retrofit-Lösungen erweitert. Somit kann mit einem einfachen und kosteneffizienten Aufbau eine Elektrifizierung des Allradantriebs erfolgen.

In einer Ausführungsform verläuft der Drehmomentübertragungsabschnitt vollständig unterhalb des Rahmenlängsträgers. Damit wird die Bauraumausnutzung weiter verbessert.

Die vorliegende Offenbarung bezieht sich in einem zweiten ersten Aspekt auf ein Fahrzeug mit der elektrischen Antriebsanordnung des ersten Aspekts. Das Fahrzeug kann eine zweite Achse aufweisen. Beispielsweise kann die erste Achse der elektrischen Antriebsanordnung des ersten Aspekts eine Hinterachse des Fahrzeugs sein und die zweite Achse kann eine Vorderachse sein. Das Fahrzeug kann ein Fahrgestell, eine Karosserie, eine Ladefläche und/oder eine Anhängerkupplung aufweisen. Die elektrische Antriebsanordnung kann eine Elektrifizierungskomponente des Fahrzeugs bereitstellen. Das Fahrzeug kann weitere Elektrifizierungskomponenten wie einen Energiespeicher, einen Wechselrichter, eine Brennstoffzelle und eine Steuereinrichtung zum Steuern der Elektrifizierungskomponenten aufweisen. Das Fahrzeug kann einen Bauraum zur Aufnahme von Elektrifizierungskomponenten auf einer oder beiden lateralen Seiten des Rahmenlängsträgers bereitstellen. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

### Kurze Beschreibung der Figuren

Fig. 1 zeigt ein Fahrzeug mit einer elektrischen Antriebsanordnung gemäß einer Ausführungsform der vorliegenden Offenbarung.
Fig. 2 zeigt elektrische Antriebsanordnungen für ein Fahrzeug mit einer koaxialen elektrischen Antriebseinrichtung gemäß Ausführungsformen der vorliegenden Offenbarung.
Fig. 3 zeigt elektrische Antriebsanordnungen für ein Fahrzeug mit einer achsparallel beabstandeten elektrischen Antriebseinrichtung gemäß Ausführungsformen der vorliegenden Offenbarung.
Fig. 4 zeigt elektrische Antriebsanordnungen für ein Fahrzeug mit einer achsparallel beabstandeten elektrischen Antriebseinrichtung und einer Planetenstufe gemäß Ausführungsformen der vorliegenden Offenbarung.
Fig. 5 zeigt elektrische Antriebsanordnungen für ein Fahrzeug mit einer achsparallel beabstandeten elektrischen Antriebseinrichtung auf einer Seite eines Abtriebselements gemäß Ausführungsformen der vorliegenden Offenbarung.
Fig. 6 zeigt elektrische Antriebsanordnungen für ein Fahrzeug mit einer abgewinkelten elektrischen Antriebseinrichtung gemäß Ausführungsformen der vorliegenden Offenbarung.
Fig. 7 zeigt elektrische Antriebsanordnungen für ein Fahrzeug mit einer abgewinkelten elektrischen Antriebseinrichtung auf einer Seite eines Abtriebselements gemäß Ausführungsformen der vorliegenden Offenbarung.

### Detaillierte Beschreibung von Ausführungsformen

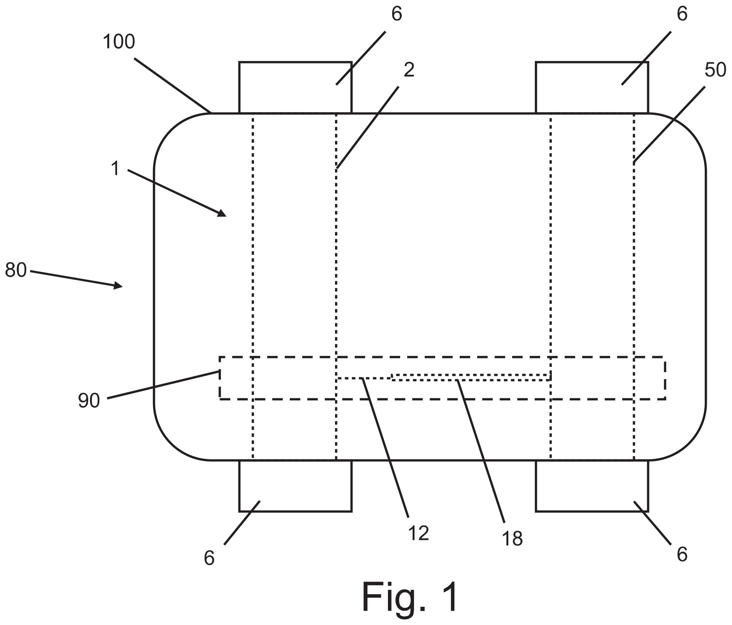

Fig. 1 zeigt ein Fahrzeug 100 mit einer elektrischen Antriebsanordnung 80 gemäß einer Ausführungsform der vorliegenden Offenbarung. Das Fahrzeug 100 ist vorliegend als ein Nutzfahrzeug ausgebildet. Das Fahrzeug 100 weist die elektrische Antriebsanordnung 80, einen elektrischen Achsantrieb 1 mit einer ersten Achse 2, eine zweite Achse 50 und vier Räder 6 auf. Zwei der Räder 6 sind mit der ersten Achse 2 zum Antreiben des Fahrzeugs 100 verbunden. Die anderen zwei der Räder 6 sind mit der zweiten Achse 50 zum Antreiben des Fahrzeugs 100 verbunden. Der elektrische Achsantrieb 1 weist eine später gezeigte und beschriebene elektrische Antriebseinrichtung 7 auf. Die elektrische Antriebsanordnung 80 weist ferner ein Abtriebselement 12 auf. Das Abtriebselement 12 ist zum Antreiben der zweiten Achse 50 über einen Drehmomentübertragungsabschnitt 18, der vorliegend als eine Gelenkwelle ausgebildet ist, ausgebildet. Vorliegend verlaufen das Abtriebselement 12 und der Drehmomentübertragungsabschnitt 18 vollständig unterhalb eines Rahmenlängsträgers 90, der in Fig. 1 schematisch gezeigt ist. Der Rahmenlängsträger 90 ist Teil eines Fahrgestells für das Fahrzeug 100. Die erste Achse 2 und die zweite Achse 50 sind jeweils über nicht dargestellte Fahrwerkskomponenten an den Rahmenlängsträger 90 angebracht. Der Rahmenlängsträger 90 ist vorliegend der elektrischen Antriebsanordnung 80 zugeordnet. In einer weiteren Ausführungsform ist der Rahmenlängsträger 90 dem Fahrzeug 100 zugeordnet.

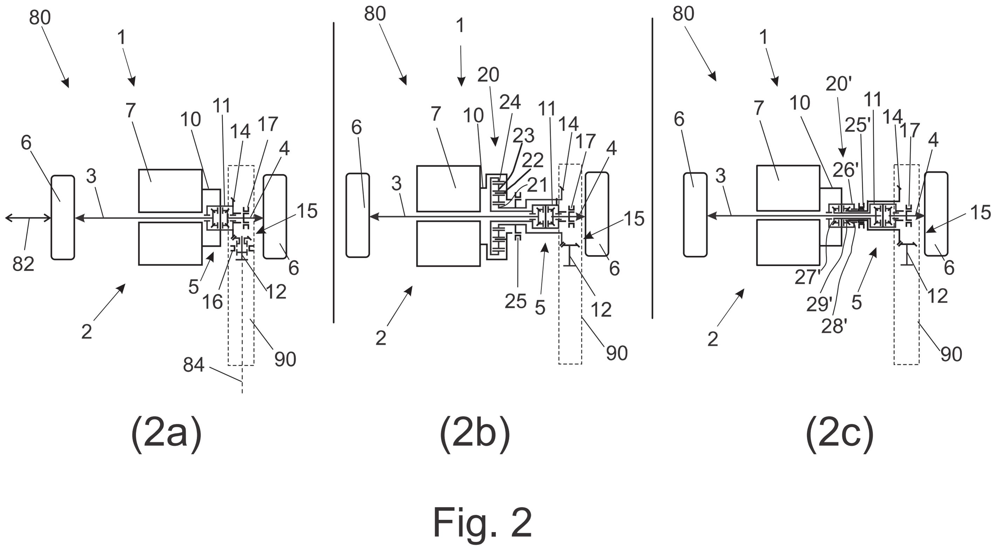

Die Figuren 2 bis 7 weisen jeweils drei Bereiche (a), (b) und (c) auf, welche jeweils eine Ausführungsform der vorliegenden Offenbarung zeigen. Fig. 2 mit ihren Bereichen 2a, 2b, 2c zeigt elektrische Antriebsanordnungen 80 für das Fahrzeug 100 mit einer koaxialen Antriebseinrichtung 7 gemäß Ausführungsformen der vorliegenden Offenbarung.

Die elektrische Antriebsanordnung 80 der Ausführungsform von Fig. 2a weist einen elektrischen Achsantrieb 1 auf. Der elektrische Achsantrieb 1 umfasst eine erste Achse 2 mit einem ersten Achsabschnitt 3, einem zweiten Achsabschnitt 4 und einem Querdifferential 5. An dem ersten Achsabschnitt 3 und an dem zweiten Achsabschnitt 4 ist jeweils ein Rad 6 drehfest angebracht. Das Querdifferential 5 ist ausgebildet, um Drehzahlunterschiede zwischen dem ersten Achsabschnitt 3 und dem zweiten Achsabschnitt 4 ausgleichen zu können. Das Querdifferential 5 weist eine Differentialsperre 17 auf, mittels welcher ein Differentialkorb 11 des Querdifferentials 5 selektiv drehfest mit dem zweiten Achsabschnitt 4 verbindbar ist. In den vorliegenden Ausführungsformen ist das Querdifferential 5 als Kegelraddifferential ausgebildet. In einer nicht dargestellten weiteren Ausführungsform ist das Querdifferential als Planetenraddifferential ausgebildet.

Darüber hinaus weist der elektrische Achsantrieb 1 eine elektrische Antriebseinrichtung 7 auf, die einen elektrischen Motor und ein optionales Getriebe aufweist. Die elektrische Antriebseinrichtung 7 ist bei den Ausführungsformen von Fig. 2 koaxial zur ersten Achse 2 und um den ersten Achsabschnitt 3 herum vorgesehen. Die elektrische Antriebseinrichtung 7 ist mit einer nicht gezeigten Batterie elektrisch verbunden, um ein Antriebsmoment zum Antreiben der ersten Achse 2 bereitzustellen. Die elektrische Antriebseinrichtung 7 weist einen Ausgang 10 auf. Der Ausgang 10 ist bei der Ausführungsform von Fig. 2a drehfest mit dem Querdifferential 5, genauer gesagt dem Differentialkorb 11 des Querdifferentials 5, verbunden. Demnach wird ein über den Ausgang 10 bereitgestelltes Drehmoment an den Differentialkorb 11 des Querdifferentials 5 übertragen. Der Differentialkorb 11 und das Querdifferential 5 übertragen somit das Drehmoment an die Achsabschnitte 3, 4 und hierüber an die Räder 6 zum Vortrieb des Fahrzeugs. In dem Differentialkorb 11 sind mehrere Kegelräder miteinander in Eingriff gelagert, über welche ein Drehzahlausgleich zwischen dem ersten Achsabschnitt 3 und dem zweiten Achsabschnitt 4 möglich ist.

Darüber hinaus umfasst der elektrische Achsantrieb 1 einen Abtrieb 14 zum mechanischen Anbinden einer zweiten Achse, welche in Fig. 2a nicht gezeigt ist. Die zweite Achse kann analog zu der ersten Achse 2 ausgebildet sein und demnach ebenfalls einen ersten Achsabschnitt 3, einen zweiten Achsabschnitt 4 und ein mit diesen mechanisch wirkverbundenes Querdifferential 5 aufweisen. Der Abtrieb 14 ist in der vorliegenden Ausführungsform als Festrad ausgebildet, das an dem Differentialkorb 11 des Querdifferentials 5 permanent drehfest vorgesehen ist. In der vorliegenden Ausführungsform ist das Festrad des Abtriebs 14 als ein Tellerrad ausgebildet. Mit dem Tellerrad des Abtriebs 14 kann ein Kegelritzel mechanisch eingreifen, um eine Kegelradstufe 15 zu bilden, welche ein Drehmoment der elektrischen Antriebseinrichtung 7 an die nicht gezeigte zweite Achse übertragen kann. Dabei treibt die Kegelradstufe 15 ein Abtriebselement 12 an. Das Abtriebselement 12 ist mit einer nicht dargestellten Gelenkwelle 18 als ein Drehmomentübertragungsabschnitt verbunden. Vorliegend erfolgt die Verbindung über eine formschlüssige Welle-Nabe-Verbindung, nämlich eine Keilwelle. Eine Rotationsachse 84 des Abtriebselements 12 ist in einer axialen Richtung 82 der ersten Achse 2 in einer Ebene mit einem Rahmenlängsträger 90 angeordnet. Zudem verläuft die Gelenkwelle 18 zumindest teilweise unterhalb des Rahmenlängsträgers 90. Der Rahmenlängsträger 90 ist in allen Figuren schematisch dargestellt. Ferner ist vorliegend eine optionale Schalteinrichtung 16 vorgesehen. Die Schalteinrichtung kann zum Herstellen und Unterbrechen der mechanischen Wirkverbindung zwischen dem Abtrieb 14 und dem Abtriebselement 12 sowie der nicht gezeigten zweiten Achse betätigt werden. Ist die Schalteinrichtung 16 beispielsweise eingelegt, so kann eine mechanische Wirkverbindung zwischen dem Abtrieb 14 und der nicht gezeigten zweiten Achse hergestellt sein. Ist die Schalteinrichtung 16 hingegen geöffnet, so kann kein Drehmoment von dem Abtrieb 14 an die zweite nicht gezeigte Achse übertragen werden.

Der elektrische Achsantrieb 1 der in Fig. 2a gezeigten Ausführungsform ist demnach ausgebildet, um ein Drehmoment der elektrischen Antriebseinrichtung 7 sowohl an die erste Achse 2 als auch über den Abtrieb 14 an die nicht gezeigte zweite Achse zu übertragen. Demnach kann mit dem elektrischen Achsantrieb 1 der vorliegenden Ausführungsform beispielsweise auf einfache und kosteneffiziente Weise ein elektrifizierter Allradantrieb für ein Fahrzeug bereitgestellt werden. Durch den Verlauf der Gelenkwelle 18 unterhalb des Rahmenlängsträgers 90 wird zudem Bauraum für weitere Komponenten an den lateralen Seiten des Rahmenlängsträgers 90 geschaffen, was eine einfache und kosteneffiziente Elektrifizierung ermöglicht.

Fig. 2b zeigt eine elektrische Antriebsanordnung 80 für ein Fahrzeug gemäß einer Ausführungsform der vorliegenden Offenbarung. Die elektrische Antriebsanordnung 80 der Ausführungsform von Fig. 2b entspricht der elektrischen Antriebsanordnung 80 der Ausführungsform von Fig. 2a mit Ausnahme der im Folgenden beschriebenen Unterschiede. Gleiche Bezugszeichen kennzeichnen entsprechende Bauteile. Im Unterschied zu der Ausführungsform von Fig. 2a weist der elektrische Achsantrieb 1 der Ausführungsform von Fig. 2b ein Längsdifferential 20 auf, das mechanisch mit dem Ausgang 10, dem Querdifferential 5 und dem Abtrieb 14 des elektrischen Achsantriebs 1 wirkverbunden ist. Das Längsdifferential 20 ist koaxial zur ersten Achse 2 vorgesehen und als Planetenraddifferential ausgebildet. Das Längsdifferential 20 der vorliegenden Ausführungsform ist ferner ausgebildet, um ein Drehmoment des Ausgangs 10 auf die erste Achse 2 und die mit dem Abtrieb 14 mechanisch gekoppelte und nicht gezeigte zweite Achse aufzuteilen. Dabei ist das Planetenraddifferential 20 der vorliegenden Ausführungsform ausgebildet, um das Drehmoment am Ausgang 10 ungleich zwischen der ersten Achse 2 und der nicht gezeigten zweiten Achse aufzuteilen. Mit anderen Worten wird das Drehmoment des Ausgangs 10 über das Planetenraddifferential 20 dieser Ausführungsform so aufgeteilt, dass eine der Achsen ein höheres Drehmoment als die andere der Achsen erhält.

Das in Planetenradbauweise ausgebildete Längsdifferential 20 weist einen einzigen Planetenradsatz mit einem Sonnenrad 21, einem Planetenträger 22 mit darauf drehbar gelagerten Planetenrädern 23 und einem Hohlrad 24 auf. Das Sonnenrad 21 des Längsdifferentials 20 ist permanent drehfest mit dem als Tellerrad ausgebildeten Abtrieb 14 verbunden. Das Hohlrad 24 des Längsdifferentials 20 ist permanent drehfest mit dem Differentialkorb 11 des Querdifferentials 5 der ersten Achse 2 verbunden. Ferner ist der Planetenträger 22 des Längsdifferentials 20 permanent drehfest mit dem Ausgang 10 der elektrischen Antriebseinrichtung 7 verbunden. Ein über den Planetenträger 22 in das Längsdifferential 20 eingeleitetes Drehmoment des Ausgangs 10 wird durch das Längsdifferential 20 auf das Sonnenrad 21 und das Hohlrad 24 und damit auf den Abtrieb 14 und das Querdifferential 5 aufgeteilt. Die Aufteilung des Drehmoments auf diese beiden Komponenten erfolgt dabei im Lichte der durch das Längsdifferential 20 bereitgestellten Standübersetzung. Ferner ist das Längsdifferential 20 ausgebildet, um Drehzahlunterschiede zwischen der ersten Achse 2 und der nicht gezeigten mit dem Abtrieb 14 mechanisch wirkverbundenen zweiten Achse ausgleichen zu können. Das Längsdifferential 20 weist ferner eine Differentialsperre 25 auf, über welche der Planetenträger 22 mit dem Sonnenrad 21 des Längsdifferentials 20 selektiv drehfest verbunden werden kann, um den Planetenradsatz zu verblocken und somit das Längsdifferential zu sperren.

Fig. 2c zeigt einen elektrischen Achsantrieb 1 gemäß einer Ausführungsform der vorliegenden Offenbarung. Der elektrische Achsantrieb 1 gemäß der Ausführungsform von Fig. 2c entspricht dem elektrischen Achsantrieb aus Fig. 2b mit Ausnahme der im Folgenden beschriebenen Unterschiede. Gleiche Bezugszeichen kennzeichnen entsprechende Bauteile. Im Unterschied zu dem Achsantrieb 1 aus Fig. 2b weist der Achsantrieb 1 aus Fig. 2c ein Längsdifferential 20' auf, welches als Kegelraddifferential ausgebildet ist. Das Kegelraddifferential 20' ist ausgebildet, um ein Drehmoment des Ausgangs 10 auf die erste Achse 2 und über den Abtrieb 14 auf eine nicht gezeigte zweite Achse aufzuteilen. Dabei wird das Drehmoment des Ausgangs 10 durch das als Kegelraddifferential ausgebildete Längsdifferential 20' im Wesentlichen in gleichen Teilen auf die erste Achse 2 und die zweite Achse aufgeteilt.

Das Kegelraddifferential 20' umfasst einen Differentialkorb 26', der permanent drehfest mit dem Ausgang 10 der elektrischen Antriebseinrichtung 7 verbunden ist. Ferner umfasst das Kegelraddifferential 20' ein erstes koaxial zur ersten Achse 2 angeordnetes Kegelrad 27', das permanent drehfest mit dem Differentialkorb 11 des Querdifferentials 5 verbunden ist. Ein weiteres koaxial zur ersten Achse 2 angeordnetes Kegelrad 28' ist permanent drehfest mit dem als Tellerrad ausgebildeten Abtrieb 14 verbunden. Die Kegelräder 27' und 28' sind über ein als Kegelrad ausgebildetes Zwischenrad 29' in mechanischer Wirkverbindung. Demnach kann über das Kegelraddifferential 20' ein Drehzahlunterschied zwischen der ersten Achse 2 und der nicht gezeigten zweiten Achse ausgeglichen werden. Das Längsdifferential 20' der Ausführungsform von Fig. 2c umfasst ferner eine Differentialsperre 25', über welche der Abtrieb 14 selektiv mit dem Differentialkorb 26' des Längsdifferential 20' drehfest verbunden werden kann, um das Längsdifferential 20' zu sperren.

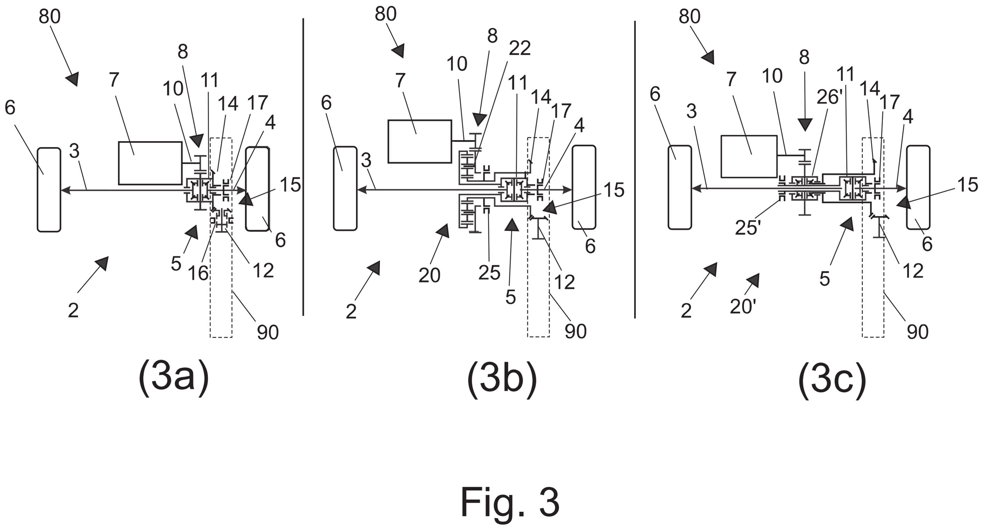

Fig. 3 mit ihren Bereichen 3a, 3b, 3c zeigt elektrische Antriebsanordnungen 80 für das Fahrzeug 100 mit einer achsparallel beabstandeten Antriebseinrichtung 7 gemäß Ausführungsformen der vorliegenden Offenbarung. Die elektrische Antriebsanordnung 80 der Ausführungsform von Fig. 3a entspricht der elektrischen Antriebsanordnung 80 der Ausführungsform von Fig. 2a mit Ausnahme der im Folgenden beschriebenen Unterschiede. Gleiche Bezugszeichen kennzeichnen entsprechende Bauteile. Im Unterschied zu der Ausführungsform von Fig. 2a ist die elektrische Antriebseinrichtung 7 der Ausführungsform von Fig. 3a achsparallel beabstandet zu der ersten Achse 2 angeordnet. Dabei ist die elektrische Antriebseinrichtung 7 der Ausführungsform von Fig. 3a auf einer dem Abtriebselement 12 gegenüberliegenden Seite der ersten Achse 2 angeordnet. Ferner ist der Ausgang 10 der elektrischen Antriebseinrichtung 7 nicht permanent drehfest mit dem Differentialkorb 11 des Querdifferentials 5 verbunden. Stattdessen ist bei der Ausführungsform von Fig. 3a der Ausgang 10 der elektrischen Antriebseinrichtung 7 über eine Stirnradstufe 8 mit dem Differentialkorb 11 des Querdifferentials 5 mechanisch wirkverbunden.

Die elektrische Antriebsanordnung 80 der Ausführungsform von Fig. 3b entspricht der elektrischen Antriebsanordnung 80 der Ausführungsform von Fig. 2b mit Ausnahme der im Folgenden beschriebenen Unterschiede. Gleiche Bezugszeichen kennzeichnen entsprechende Bauteile. Im Unterschied zu der Ausführungsform von Fig. 2b ist die elektrische Antriebseinrichtung 7 der Ausführungsform von Fig. 3b achsparallel beabstandet zu der ersten Achse 2 angeordnet. Entsprechend ist der Ausgang 10 der elektrischen Antriebseinrichtung 7 über eine Stirnradstufe 8 mit dem Planetenträger 22 des Längsdifferentials 20 mechanisch wirkverbunden.

Die elektrische Antriebsanordnung 80 der Ausführungsform von Fig. 3c entspricht der elektrischen Antriebsanordnung 80 der Ausführungsform von Fig. 2c mit Ausnahme der im Folgenden beschriebenen Unterschiede. Gleiche Bezugszeichen kennzeichnen entsprechende Bauteile. Im Unterschied zu der Ausführungsform von Fig. 2c ist die elektrische Antriebseinrichtung 7 der Ausführungsform von Fig. 3c achsparallel beabstandet zu der ersten Achse 2 angeordnet. Entsprechend ist der Ausgang 10 der elektrischen Antriebseinrichtung 7 über eine Stirnradstufe 8 mit dem Differentialkorb 26' des Längsdifferentials 20' mechanisch wirkverbunden.

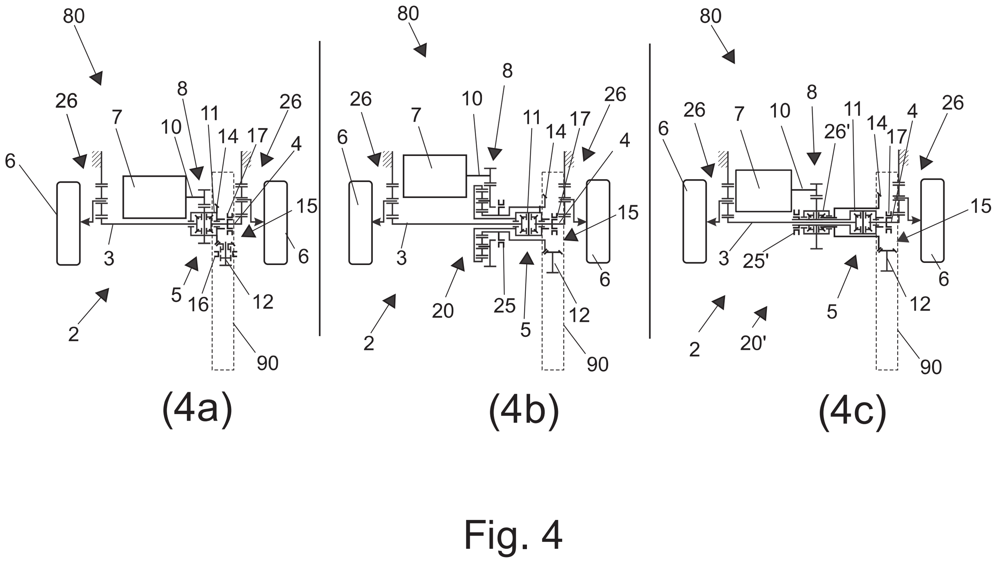

Fig. 4 mit ihren Bereichen 4a, 4b, 4c zeigt elektrische Antriebsanordnungen 80 für das Fahrzeug 100 mit einer achsparallel beabstandeten Antriebseinrichtung 7 und einer Planetenstufe 26 gemäß Ausführungsformen der vorliegenden Offenbarung. Die elektrische Antriebsanordnung 80 der Ausführungsform von Fig. 4a entspricht der elektrischen Antriebsanordnung 80 der Ausführungsform von Fig. 3a mit Ausnahme des im Folgenden beschriebenen Unterschieds. Gleiche Bezugszeichen kennzeichnen entsprechende Bauteile. Im Unterschied zu der Ausführungsform von Fig. 3a ist bei der elektrischen Antriebsanordnung 80 der Ausführungsform von Fig. 4a jeweils eine Planetenstufe 26 zum Bereitstellen einer zusätzlichen Übersetzung zwischen den Achsabschnitten 3 und 4 und den Rädern 6 vorgesehen. Gleichermaßen entspricht die elektrische Antriebsanordnung 80 der Ausführungsform von Fig. 4b der elektrischen Antriebsanordnung 80 der Ausführungsform von Fig. 3b, erweitert um die Planetenstufe 26 gemäß Fig. 4a. Ebenfalls entspricht die elektrische Antriebsanordnung 80 der Ausführungsform von Fig. 4c der elektrischen Antriebsanordnung 80 der Ausführungsform von Fig. 3c, erweitert um die Planetenstufe 26 gemäß der Ausführungsform von Fig. 4a.

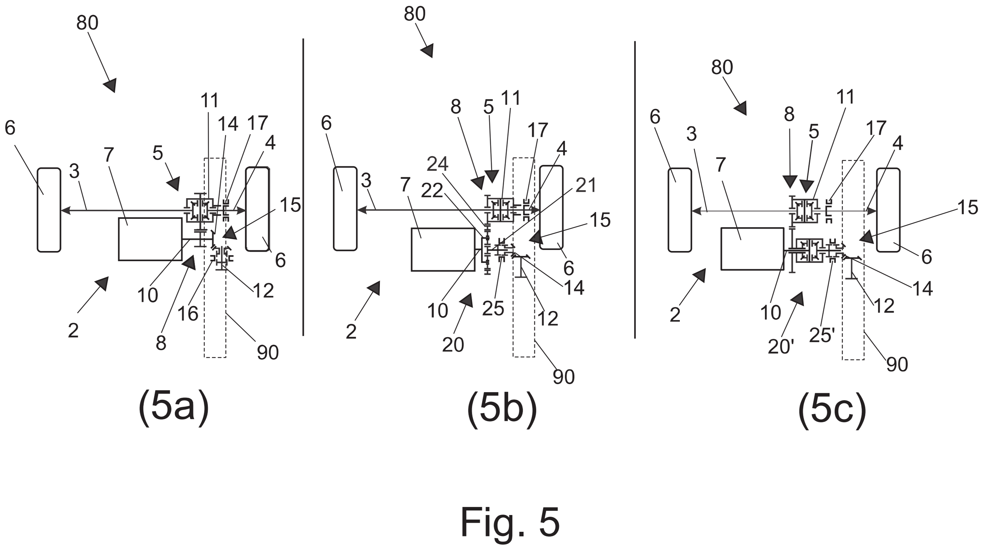

Fig. 5 mit ihren Bereichen 5a, 5b, 5c zeigt elektrische Antriebsanordnungen 80 für das Fahrzeug 100 mit einer achsparallel beabstandeten elektrischen Antriebseinrichtung 7 auf einer Seite des Abtriebselements 12. Die elektrische Antriebsanordnung 80 der Ausführungsform von Fig. 5a entspricht der elektrischen Antriebsanordnung 80 der Ausführungsform von Fig. 3a mit Ausnahme der im Folgenden beschriebenen Unterschiede. Gleiche Bezugszeichen kennzeichnen entsprechende Bauteile. Im Unterschied zu der Ausführungsform von Fig. 3a, bei welcher die elektrische Antriebseinrichtung 7 auf einer dem Abtriebselement 12 gegenüberliegenden Seite der ersten Achse 2 angeordnet ist, ist die elektrische Antriebseinrichtung 7 der Ausführungsform von Fig. 5a auf der Seite des Abtriebselements 12 angeordnet. Analog zur Ausführungsform von Fig. 3a treibt bei der Ausführungsform von Fig. 5a der Ausgang 10 der elektrischen Antriebseinrichtung 7 den Differentialkorb 11 des Querdifferentials 5 über eine Stirnradstufe 8 an. Abweichend von der Ausführungsform von Fig. 3a ist der Abtrieb 14 der Ausführungsform von Fig. 5a permanent drehfest mit dem Ausgang 10 der elektrischen Antriebseinrichtung 7 verbunden. Die Ausgestaltung des Abtriebselements 12 mit einer Kegelradstufe 15 zum Anbinden an den Abtrieb 14 ist analog zu der Ausführungsform von Fig. 3a, jedoch weist die Kegelradstufe 15 der Fig. 5a ein von der Fig. 3a verschiedenes Übersetzungsverhältnis.

Die elektrische Antriebsanordnung 80 der Ausführungsform von Fig. 5b entspricht der elektrischen Antriebsanordnung 80 der Ausführungsform von Fig. 3b mit Ausnahme der im Folgenden beschriebenen Unterschiede. Gleiche Bezugszeichen kennzeichnen entsprechende Bauteile. Im Unterschied zu der Ausführungsform von Fig. 3b ist bei der Ausführungsform von Fig. 5b die elektrische Antriebseinrichtung 7 auf der dem Abtriebselement 12 zugewandten Seite der ersten Achse 2 angeordnet. Zudem ist das Längsdifferential 20 in Planetenradbauweise nicht gemäß Fig. 3a koaxial zu der ersten Achse 2 angeordnet. Stattdessen ist das Längsdifferential 20 koaxial zu dem Ausgang 10 der elektrischen Antriebseinrichtung 7 und somit achsparallel beabstandet zu der ersten Achse 2 angeordnet. Der Ausgang 10 der elektrischen Antriebseinrichtung 7 ist mit dem Planetenträger 22 des Längsdifferentials 20 permanent drehfest verbunden. Das Hohlrad 24 des Längsdifferentials 20 weist eine Außenverzahnung auf, durch welche eine Stirnradstufe 8 zum Antreiben des Differentialkorbs 11 und somit des Querdifferentials 5 ausgebildet wird. Darüber hinaus ist der Abtrieb 14 koaxial zu dem Ausgang 10 der elektrischen Antriebseinrichtung 7 angeordnet und wird über das Sonnenrad 21 des Längsdifferentials 20 angetrieben. Abweichend von der Ausführungsform von Fig. 3c ist die Differentialsperre 25 nicht zum Sperren des Längsdifferentials 20, sondern zum Abschalten des Abtriebs 14 durch Trennen der Wirkverbindung zwischen dem Sonnenrad 21 und dem Abtrieb 14 ausgebildet.

Die elektrische Antriebsanordnung 80 der Ausführungsform von Fig. 5c entspricht der elektrischen Antriebsanordnung 80 der Ausführungsform von Fig. 3c mit Ausnahme der im Folgenden beschriebenen Unterschiede. Gleiche Bezugszeichen kennzeichnen entsprechende Bauteile. Im Unterschied zu der Ausführungsform von Fig. 3c ist die elektrische Antriebseinrichtung 7 der Ausführungsform von Fig. 5c auf der dem Abtriebselement 12 zugewandten Seite der ersten Achse 2 angeordnet. Der Ausgang 10 der elektrischen Antriebseinrichtung 7 treibt den Differentialkorb 11 des Querdifferentials 5 über eine Stirnradstufe 8 an. Das Längsdifferential 20', das als Kegelraddifferential ausgebildet ist, ist koaxial zu dem Ausgang 10 der elektrischen Antriebseinrichtung 7 angeordnet. Der Ausgang 10 ist mit einem der Kegelräder des Längsdifferentials 20' permanent drehfest verbunden. Der Abtrieb 14 ist koaxial zu dem Ausgang 10 der elektrischen Antriebseinrichtung 7 angeordnet und ist mit dem anderen der Kegelräder des Längsdifferentials 20' drehfest verbindbar. Abweichend von der Ausführungsform von Fig. 3c und ähnlich zu der Ausführungsform von Fig. 5b ist die Differentialsperre 25' nicht zum Sperren des Längsdifferentials 20', sondern zum Abschalten des Abtriebs 14 durch Trennen der Wirkverbindung zwischen dem anderen Kegelrad des Längsdifferentials 20' und dem Abtrieb 14 ausgebildet.

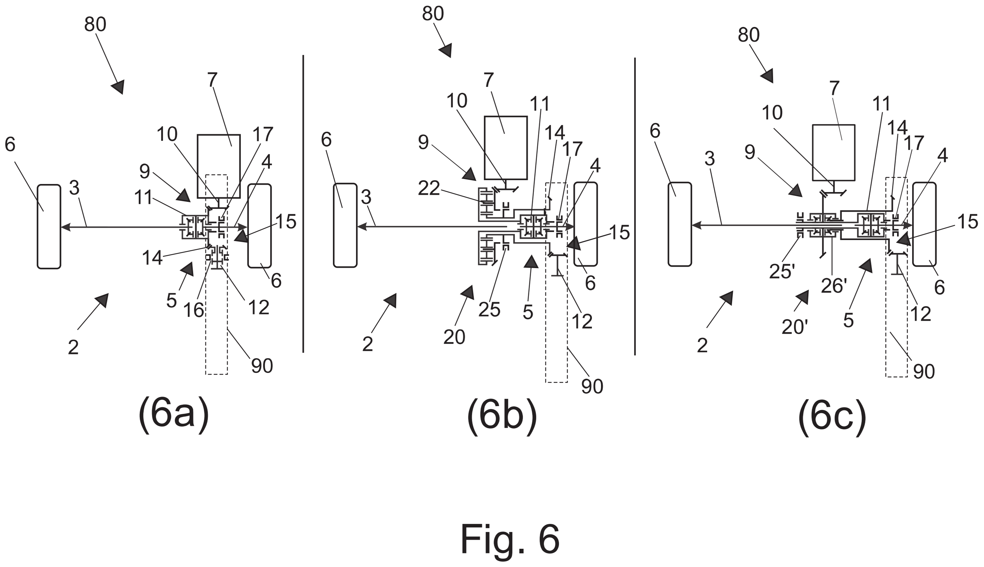

Fig. 6 mit ihren Bereichen 6a, 6b, 6c zeigt elektrische Antriebsanordnungen 80 für das Fahrzeug 100 mit einer abgewinkelten Antriebseinrichtung 7 gemäß Ausführungsformen der vorliegenden Offenbarung. Die elektrische Antriebsanordnung 80 der Ausführungsform von Fig. 6a entspricht der elektrischen Antriebsanordnung 80 der Ausführungsform von Fig. 3a mit Ausnahme der im Folgenden beschriebenen Unterschiede. Gleiche Bezugszeichen kennzeichnen entsprechende Bauteile. Im Unterschied zu der Ausführungsform von Fig. 3a ist die elektrische Antriebseinrichtung 7 der Ausführungsform von Fig. 6a abgewinkelt zu der ersten Achse 2 angeordnet. Vorliegend ist die elektrische Antriebseinrichtung 7 orthogonal zu der ersten Achse 2 angeordnet. Hierzu ist anstelle der Stirnradstufe 8 eine Kegelradstufe 9 vorgesehen, welche eine mechanische Wirkverbindung des Ausgangs 10 der elektrischen Antriebseinrichtung 7 mit dem Differentialkorb 11 des Querdifferentials 5 bereitstellt. Bei der vorliegenden Ausführungsform dient das Tellerrad des Abtriebs 14 als ein Abtriebsrad der Kegelradstufe 9. In einer weiteren Ausführungsform ist das Abtriebsrad der Kegelradstufe 9 als separates Tellerrad ausgebildet. Darüber hinaus ist bei der Ausführungsform von Fig. 6a die elektrische Antriebseinrichtung 7 unterhalb des Rahmenlängsträgers 90 angeordnet. Dadurch wird zusätzlicher Bauraum auf lateralen Seiten des Rahmenlängsträgers 90 bereitgestellt. In einer weiteren Ausführungsform ist die elektrische Antriebseinrichtung ausgehend von der Ausführungsform der Fig. 6a auf einer lateralen Seite des Rahmenlängsträgers 90 versetzt, beispielsweise indem die Kegelradstufe 9 mit Bezug auf die axiale Richtung 82 der ersten Achse 2 andersherum angeordnet wird.

Die elektrische Antriebsanordnung 80 der Ausführungsform von Fig. 6b entspricht der elektrischen Antriebsanordnung 80 der Ausführungsform von Fig. 3b mit Ausnahme der im Folgenden beschriebenen Unterschiede. Gleiche Bezugszeichen kennzeichnen entsprechende Bauteile. Die elektrische Antriebseinrichtung 7 der Ausführungsform von Fig. 6b ist zu der ersten Achse 2 abgewinkelt, ähnlich wie die elektrische Antriebseinrichtung 7 der Ausführungsform von Fig. 6a. Hierzu ist anstelle der Stirnradstufe 8 von Fig. 3b eine Kegelradstufe 9 vorgesehen. Dabei treibt der Ausgang 10 der elektrischen Antriebseinrichtung 7 den Planetenträger 22 des Längsdifferentials 20 über die Kegelradstufe 9 an. Die elektrische Antriebseinrichtung 7 ist auf einer lateralen Seite des Rahmenlängsträgers 90 angeordnet, nämlich der linken Seite in Fig. 6.

Die elektrische Antriebsanordnung 80 der Ausführungsform von Fig. 6c entspricht der elektrischen Antriebsanordnung 80 der Ausführungsform von Fig. 3c mit Ausnahme der im Folgenden beschriebenen Unterschiede. Gleiche Bezugszeichen kennzeichnen entsprechende Bauteile. Im Unterschied zu der Ausführungsform von Fig. 3c ist die elektrische Antriebseinrichtung 7 der Ausführungsform von Fig. 6c abgewinkelt zu der ersten Achse 2 angeordnet. Hierzu ist anstelle der Stirnradstufe 8 von Fig. 3c eine Kegelradstufe 9 vorgesehen, ähnlich wie die Ausführungsformen von Fig. 6a und Fig. 6b. Dabei treibt der Ausgang 10 der elektrischen Antriebseinrichtung 7 den Differentialkorb 26' des Längsdifferentials 20' über die Kegelradstufe 9 an. Die elektrische Antriebseinrichtung 7 ist auf einer lateralen Seite des Rahmenlängsträgers 90, nämlich der linken Seite in Fig. 6c, angeordnet.

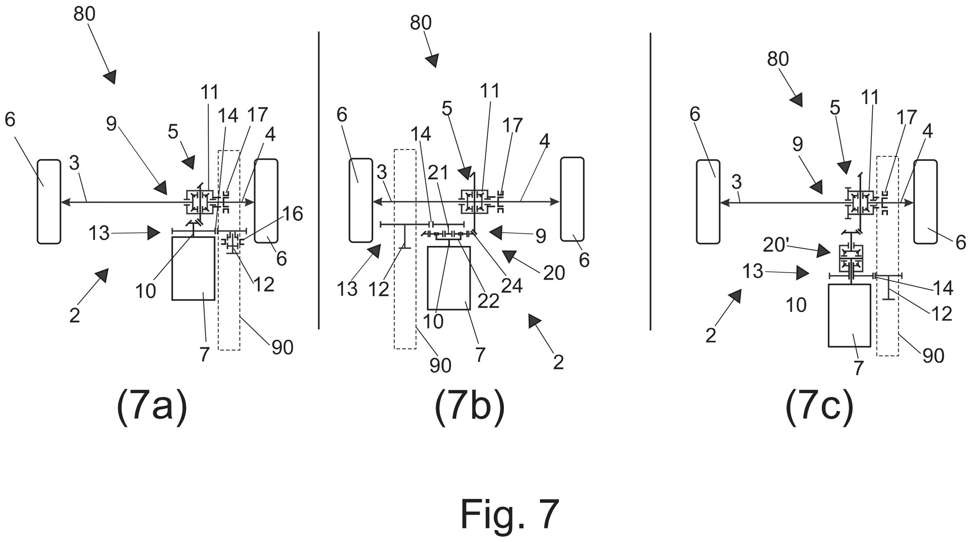

Fig. 7 mit ihren Bereichen 7a, 7b, 7c zeigt elektrische Antriebsanordnungen 80 für das Fahrzeug 100 mit einer abgewinkelten elektrischen Antriebseinrichtung 7 auf einer Seite eines Abtriebselements 12 gemäß Ausführungsformen der vorliegenden Offenbarung. Die elektrische Antriebsanordnung 80 der Ausführungsform von Fig. 7a entspricht der elektrischen Antriebsanordnung 80 der Ausführungsform von Fig. 6a mit Ausnahme der im Folgenden beschriebenen Unterschiede. Gleiche Bezugszeichen kennzeichnen entsprechende Bauteile. Im Unterschied zu der Ausführungsform von Fig. 6a ist die elektrische Antriebseinrichtung 7 der Ausführungsform von Fig. 7a auf der Seite des Abtriebselements 12 angeordnet. Das Antreiben des Querdifferentials 5 erfolgt über eine Kegelradstufe 9 auf gleiche Weise wie bei Fig. 6a, indem der Ausgang 10 der elektrischen Antriebseinrichtung 7 über die Kegelradstufe 9 den Differentialkorb 11 antreibt. Zudem ist der Ausgang 10 der elektrischen Antriebseinrichtung 7 mit dem Abtrieb 14 permanent drehfest verbunden. Dabei bildet der Abtrieb 14 ein Stirnrad einer Stirnradstufe 13 zum Antreiben des Abtriebselements 12 aus. Demnach sind der Ausgang 10 der elektrischen Antriebseinrichtung 7 und das Abtriebselement 12 achsparallel beabstandet angeordnet.

Die elektrische Antriebsanordnung 80 der Ausführungsform von Fig. 7b entspricht der elektrischen Antriebsanordnung 80 der Ausführungsform von Fig. 6b mit Ausnahme der im Folgenden beschriebenen Unterschiede. Gleiche Bezugszeichen kennzeichnen entsprechende Bauteile. Im Unterschied zu der Ausführungsform von Fig. 6b ist die elektrische Antriebseinrichtung 7 der Ausführungsform von Fig. 7b auf der Seite des Abtriebselements 12 angeordnet. Zudem ist das Abtriebselement 12 mit Bezug auf eine Längsachse des Fahrzeugs 100 nicht auf einer Seite des zweiten Achsabschnitts 4 angeordnet, sondern auf einer Seite des ersten Achsabschnitts 3. Gleichermaßen ist der Rahmenlängsträger 90 auf der Seite des ersten Achsabschnitts 3 angeordnet. Somit sind auch bei der Ausführungsform von Fig. 7b der Rahmenlängsträger 90 und die Rotationsachse des Abtriebselements 12 in der axialen Richtung der ersten Achse 2 in derselben Ebene angeordnet. Im Unterschied zu der Ausführungsform von Fig. 6b ist bei der Ausführungsform von Fig. 7b das Längsdifferential 20 nicht koaxial zu der ersten Achse 2, sondern koaxial zu dem Ausgang 10 der elektrischen Antriebseinrichtung 7 angeordnet. Der Ausgang 10 ist mit dem Planetenträger 22 des Längsdifferentials 20 permanent drehfest verbunden. Das Hohlrad 24 des Längsdifferentials 20 ist einstückig mit einem Kegelritzel einer Kegelradstufe 9 zum Antreiben des Differentialkorbs 11 des Querdifferentials 5 ausgebildet. Der Abtrieb 14 ist mit dem Sonnenrad des Längsdifferentials 20 permanent drehfest verbunden und treibt das Abtriebselement 12 über eine Stirnradstufe 13 an.

Die elektrische Antriebsanordnung 80 der Ausführungsform von Fig. 7c entspricht der elektrischen Antriebsanordnung 80 der Ausführungsform von Fig. 6c mit Ausnahme der im Folgenden beschriebenen Unterschiede. Gleiche Bezugszeichen kennzeichnen entsprechende Bauteile. Im Unterschied zu der Ausführungsform von Fig. 6c ist die elektrische Antriebseinrichtung 7 der Ausführungsform von Fig. 7c auf der Seite des Abtriebselements 12 angeordnet. Zudem ist das Längsdifferential 20' nicht koaxial zu der ersten Achse 2 angeordnet, sondern koaxial zu dem Ausgang 10 der elektrischen Antriebseinrichtung 7. Der Ausgang 10 ist mit einem der Kegelräder des Längsdifferentials 20' permanent drehfest verbunden. Das andere der Kegelräder des Längsdifferentials 20' ist mit einem Kegelritzel einer Kegelradstufe 9 zum Antreiben des Differentialkorbs 11 des Querdifferentials 5 permanent drehfest verbunden. Der Differentialkorb des Längsdifferentials 20' ist mit dem als Stirnrad ausgebildeten Abtrieb 14 permanent drehfest verbunden. Der Abtrieb 14 treibt das Abtriebselement 12 über eine Stirnradstufe 13 an.

### Bezugszeichen

- 1: elektrischer Achsantrieb
- 2: erste Achse
- 3, 4: Achsabschnitt
- 5: Querdifferential
- 6: Rad
- 7: elektrische Antriebseinrichtung
- 8, 13: Stirnradstufe
- 9, 15: Kegelradstufe
- 10: Ausgang
- 11, 26': Differentialkorb
- 12: Abtriebselement
- 14: Abtrieb
- 16: Schalteinrichtung
- 17, 25, 25': Differentialsperre
- 18: Drehmomentübertragungsabschnitt
- 20, 20': Längsdifferential
- 21: Sonnenrad
- 22: Planetenträger
- 23: Planetenrad
- 24: Hohlrad
- 26: Planetenstufe
- 27', 28', 29': Differentialkegelrad
- 80: elektrische Antriebsanordnung
- 82: axiale Richtung
- 84: Rotationsachse
- 90: Rahmenlängsträger
- 100: Fahrzeug

## Patentansprüche

1. Elektrische Antriebsanordnung (80) für ein Fahrzeug (100) mit einem Rahmenlängsträger (90) und einem elektrischen Achsantrieb (1), welcher eine erste Achse (2) zum Anbringen von Rädern (6), eine elektrischen Antriebseinrichtung (7) zum Antreiben der ersten Achse (2) und einen Abtrieb (14) mit einem Abtriebselement (12) zum mechanischen Anbinden einer zweiten Achse (50) zum Anbringen von Rädern (6) aufweist, wobei die elektrische Antriebsanordnung (80) ausgebildet ist, um mit der elektrischen Antriebseinrichtung (7) neben der ersten Achse (2) auch die zweite Achse (50) über das Abtriebselement (12) antreiben zu können, und wobei der Abtrieb (14) derart ausgebildet ist, dass ein mit dem Abtriebselement (12) mechanisch gekoppelter Drehmomentübertragungsabschnitt (18) zum Übertragen eines Drehmoments von dem Abtriebselement (12) zu der zweiten Achse (50) zumindest teilweise unterhalb des Rahmenlängsträgers (90) verlaufen kann.

2. Elektrische Antriebsanordnung (80) nach Anspruch 1, **dadurch gekennzeichnet, dass** das Abtriebselement (12) über eine Kegelradstufe (15) oder eine Stirnradstufe (13) antreibbar ist.

3. Elektrische Antriebsanordnung (80) nach Anspruch 1 oder 2, **dadurch gekennzeichnet, dass** die elektrische Antriebseinrichtung (7) achsparallel beabstandet zu der ersten Achse (2) angeordnet ist.

4. Elektrische Antriebsanordnung (80) nach Anspruch 1 oder 2, **dadurch gekennzeichnet, dass** die elektrische Antriebseinrichtung (7) koaxial zu der ersten Achse (2) angeordnet ist.

5. Elektrische Antriebsanordnung (80) nach Anspruch 1 oder 2, **dadurch gekennzeichnet, dass** die elektrische Antriebseinrichtung (7) abgewinkelt zu der ersten Achse (2) angeordnet ist.

6. Elektrische Antriebsanordnung (80) nach einem der vorangehenden Ansprüche, **dadurch gekennzeichnet, dass** der elektrische Achsantrieb (1) ein Längsdifferential (20; 20') zum Drehzahlausgleich zwischen der ersten Achse (2) und der zweiten Achse (50) aufweist, wobei das Längsdifferential (20; 20') als zumindest eines von einem Planetenraddifferential (20) und einem Kegelraddifferential (20') ausgebildet ist.

7. Elektrische Antriebsanordnung (80) nach einem der vorangehenden Ansprüche, **dadurch gekennzeichnet, dass** der elektrische Achsantrieb (1) eine Schalteinrichtung (16) zum Herstellen und Unterbrechen einer mechanischen Wirkverbindung zwischen dem Abtrieb (14) und der zweiten Achse (50) aufweist.

8. Elektrische Antriebsanordnung (80) nach einem der vorangehenden Ansprüche, **dadurch gekennzeichnet, dass** die erste Achse (2) einen ersten Achsabschnitt (3) zum Anbringen eines ersten Rads (6), einen zweiten Achsabschnitt (4) zum Anbringen eines zweiten Rads (6) und ein mit dem ersten und zweiten Achsabschnitt (3, 4) mechanisch wirkverbundenes Querdifferential (5) zum Drehzahlausgleich zwischen den Achsabschnitten (3, 4) aufweist.

9. Elektrische Antriebsanordnung (80) nach Anspruch 8, **dadurch gekennzeichnet, dass** die erste Achse (2) jeweils eine Planetenstufe (26) zum Bereitstellen einer zusätzlichen Übersetzung zwischen den Achsabschnitten (2) und (4) und den Rädern (6) aufweist.

10. Elektrische Antriebsanordnung (80) nach einem der vorangehenden Ansprüche, **dadurch gekennzeichnet, dass** die elektrische Antriebsanordnung (80) einen Drehmomentübertragungsabschnitt (18) in einem Drehmomentfluss von dem Abtriebselement (12) zu der zweiten Achse (50) aufweist, wobei der Drehmomentübertragungsabschnitt (18) zumindest teilweise unterhalb des Rahmenlängsträgers (90) verläuft.

11. Elektrische Antriebsanordnung (80) nach Anspruch 10, **dadurch gekennzeichnet, dass** der Drehmomentübertragungsabschnitt (18) vollständig unterhalb des Rahmenlängsträgers (90) verläuft.

12. Fahrzeug (100) mit einer elektrischen Antriebsanordnung (80) nach einem der vorangehenden Ansprüche.
